# EUROPEAN PATENT APPLICATION

(11) **EP 2 196 315 A1**
(43) Date of publication of application: **16.06.2010**
(21) Application number: 09177040.4
(22) Date of filing: 25.11.2009
(51) Int. Cl.: B41J 2/00, B23K 3/08, B23K 1/00

(54) **Unified metal alloying in a diffusion furnace**

(30) Priority: 01.12.2008 US 325973
(71) Applicant: Xerox Corporation, Rochester, New York 14644 (US)
(72) Inventor: Buck, David K., Durham, OR 97224 (US)
(74) Representative: Gervasi, Gemma

(57) **Abstract**

A method and apparatus for performing a unified metal alloying of jet stacks without the use of a bond press, and without the use of a continuous belt driven furnace. The method may include horizontally stacking fusable parts onto a fixture and transporting the fixture into an interior of a reaction chamber of a diffusion furnace. An operator may seal the interior of the reaction chamber and the diffusion furnace may increase a temperature of an atmosphere of the interior of the reaction chamber to a predefined dwell temperature to perform a first level alloying for a predefined dwell time. The diffusion furnace may thereafter increase the temperature of the interior of the reaction chamber to a predefined brazing temperature to perform a second level alloying for a predefined brazing time.

## Description

### BACKGROUND

Floor space of manufacturing plants is valuable and commands a premium. Not only does each piece of manufacturing equipment occupy floor space, but customization and maintenance of the equipment demand resources-including money to purchase the equipment, power to operate the equipment, expertise to run the equipment, and expertise to maintain the equipment, among other expenses. Historically, the production of printer jet stacks has required the use of multiple pieces of manufacturing equipment, such as a high-pressure bond press and a continuous belt furnace.

The manufacturing of printer jet stacks involves several steps. Typically, jet stack plates are bonded together using the high-pressure bond press to get the plates to stick together. The bond press is a large piece of equipment capable of applying about 3000 pounds per square inch (psi) to the jet stack plates. Once the jet stack plates have been bonded, an operator, engineer, or other qualified technician removes the jet stack plates from the bond press and transports the jet stack plates to another large piece of equipment, namely, a continuous belt furnace. The continuous belt furnace brazes jet stack plates into a single, fused-together, hermetically sealed plate. The fused-together plate yields a brazed jet stack for use in a printer. The brazed jet stack includes aligned channels within the fused plate for squirting ink out.

Using a process that is fundamentally mechanical, the bond press causes the materials of the jet stack plates to soften and to increase their surface area. The bond press causes the jet stacks plates to stick to each other (as opposed to being alloyed together) using a high-pressure low-temperature environment. The process results in jet stack plates that are basically aligned, which can then be inserted into the continuous belt furnace for a separate brazing procedure. However, the bond press is bulky, expensive to operate, and is known to cause metal contamination, among other problems.

### BRIEF DESCRIPTION OF THE DRAWINGS

FIG. 1 shows a perspective view of an example fixture for stacking fusable parts, such as jet stack plates, in preparation for unified metal alloying in a diffusion furnace, according to an embodiment of the present invention.

FIG. 2 shows a somewhat schematic diagram illustrating the arranging of jet stack plates into kits, and ceramic plates disposed between the kits, such that the jet stack plates and the ceramic plates are aligned via pins affixed to the fixture of FIG. 1, and stacked on a surface of the fixture of FIG. 1, according to another embodiment of the present invention.

FIG. 3 shows an elevation view of a portion of two jet stack plates of FIG. 2 that are stacked, according to yet another embodiment of the present invention.

FIG. 4 shows a perspective view of the example fixture of FIG. 1 along with columns of the jet stack plates and ceramic plates of FIG. 2 stacked and aligned using the ceramic pins.

FIG. 5 shows an elevation view of the example fixture of FIG. 1 along with columns of the jet stack plates and ceramic plates of FIG. 2 stacked and aligned using the ceramic pins.

FIG. 6 shows an example of a diffusion furnace including an enclosure, a reaction chamber, a moveable furnace heating element, and the fixture holding the jet stacks and ceramic plates as illustrated in FIGs. 2-5, and a load arm for inserting the fixture into the reaction chamber.

FIG. 7 shows an example of the fixture holding the jet stacks and ceramic plates as illustrated in FIGs. 2-5 inserted into the reaction chamber of FIG. 6, and also the moveable furnace heating element in a location spaced apart from the reaction chamber of the diffusion furnace.

FIG. 8 shows an example of the moveable furnace heating element in a location substantially proximal to the reaction chamber of the diffusion furnace.

FIG. 9 shows a flow diagram illustrating some of the steps that may be performed in manufacturing jet stacks, according to some embodiments of the present invention.

FIG. 10 shows a flow diagram illustrating other steps that may be performed in manufacturing jet stacks, according to some embodiments of the present invention.

The foregoing and other features, objects, and advantages of the invention will become more readily apparent from the following detailed description, which proceeds with reference to the accompanying drawings.

### DETAILED DESCRIPTION OF THE EMBODIMENTS

Embodiments of the present invention eliminate the use of both the bond press piece of equipment and the continuous belt furnace piece of equipment, and replace these with a unified metal alloying process using a diffusion furnace. The unified metal alloying process allows fusable parts to be aligned and fused together without the need for a bond press and a continuous belt furnace. For example, the unified metal alloying process can yield fused-together hermetically sealed jet stacks in about the same amount of time as the conventional method, but using less bulky, less expensive, and cleaner equipment. These and other inventive aspects of the present invention will become more readily apparent from the following detailed description of the drawings.

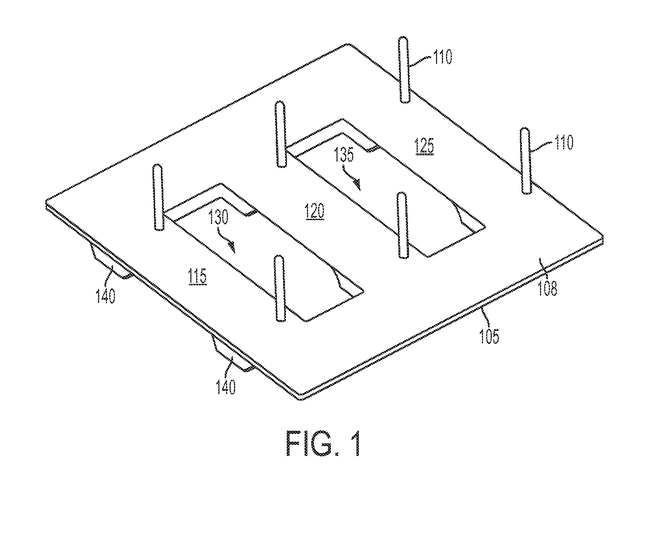

FIG. 1 shows a perspective view of an example fixture 105 for stacking fusable parts, such as jet stack plates, in preparation for unified metal alloying in a diffusion furnace, according to an embodiment of the present invention.

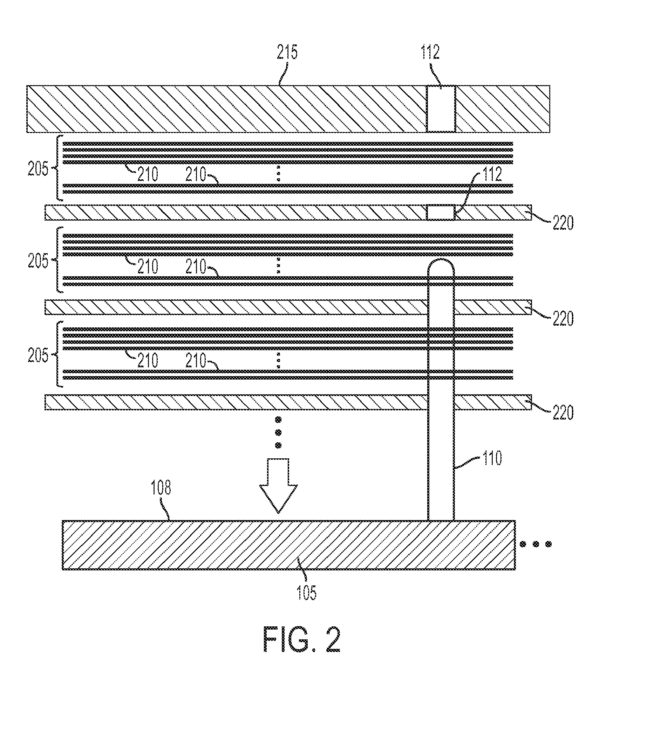

The fixture 105 may include alignment pins 110 protruding from a surface 108. The alignment pins 110 may comprise ceramic and the fixture 105 may comprise stainless steel. The purpose for using ceramic material for the alignment pins 110 will be explained below with reference to FIGs. 2-5. With respect to using stainless steel for the fixture 105, the fixture 105 may alternatively comprise quartz rather than stainless steel. However, the use of stainless steel is preferable because of better heat transfer characteristics. As will further be discussed below, the unified metal alloying process involves aggressive ramping of temperatures, and a fixture made of quartz is not as robust as stainless steel in such an environment. Moreover, the use of a stainless steel fixture results in a higher yield of acceptable jet stacks. While materials besides stainless steel, quarts, and ceramic may be used in the construction of fixture 105 and alignment pins 110, improved yields may be achieved when the fixture 105 comprises stainless steel and the alignment pins 110 comprise ceramic.

The fixture 105 may include at least three regions that define stackable areas 115, 120, and 125. Each region may include two alignment pins 110 arranged so that they are sufficiently spaced apart, as shown in FIG. 1. As later described, an operator, engineer, or other qualified technician may stack fusable parts, such as jet stack plates, or other plates such as ceramic plates, on the stackable areas 115, 120, or 125, and aligned to the alignment pins 110. While the fixture 105 shows three regions that define stackable areas, the fixture 105 may also include fewer or greater than three regions to define the stackable areas.

The fixture 105 may include openings 130 and 135 to facilitate even heat distribution during the unified metal alloying process. The fixture 105 may also include support elements 140 beneath the surface 108 of the fixture 105 to provide structural support to the fixture 105 and the fusable parts (not shown). The fixture 105 may be insertable into a diffusion furnace to alloy the fusable parts (not shown) into at least one alloyed part, as further explained below.

FIG. 2 shows a somewhat schematic diagram illustrating the arranging of jet stack plates 210 into kits 205 (ultimately yielding jet stacks 205), and separation plates 220 disposed between the kits 205, such that the jet stack plates 210 and the separation plates 220 are aligned via alignment pins 110 affixed to the fixture 105 of FIG. 1, and stacked on the surface 108 of the fixture 105 of FIG. 1, according to another embodiment of the present invention.

In this embodiment, an operator, engineer, or other qualified technician may stack fusable parts 210 on the fixture 105 while aligning the fusable parts 210 via alignment pins 110 affixed to the fixture 105. The fusable parts 210 may be, for example, jet stack plates, each of the jet stack plates having a first metal plated with a second metal. The first metal of the jet stack plate may comprise stainless steel plated with the second metal, which may be gold. Alternatively, the fusable parts 210 may be components of other types of devices such as hard disk drives, circuit boards, or any other type of components that may need to be fused together in a unified metal alloying process. For ease of reference, the fusable parts 210 will generally be referred to herein as jet stack plates 210.

The operator or other qualified technician may arrange the jet stack plates 210 into kits 205, each kit 205 comprising about 16 to 22 jet stack plates 210 and corresponding to one jet stack 205. While stacking the kits 205, the operator or other qualified technician may dispose the separation plates 220 having a predefined thickness between each of the kits 205, and may also dispose a top plate 215 on the kits 205. The top plate 215 may have a predefined thickness greater than the thickness of the separation plates 220.

The separation plates 220 and the top plate 215 are preferably comprised of ceramic because plates made of stainless steel, titanium nitride, or other similar materials, have a tendency to stick to small amounts of gold (not shown) exposed between jet stack plates 210, or to other parts of the jet stack plates 210. This may result in an unwanted fusing between the jet stack plates 210 and either of the plates 220 or the top plate 215. Even where a separation may be possible after an unintentional fusing together, such a separation effort may nevertheless result in unusable jet stacks because of damage incurred as a result of the separation effort. The alignment pins 110 may also be comprised of ceramic for similar reasons (e.g., to prevent the jet stack plates 210 from sticking to the alignment pins 110).

Preferably, the ceramic plates 220, the ceramic top plate 215, and the ceramic alignment pins 110 have a purity not greater than about 96% ceramic. Ceramic is generally composed of aluminum oxide. If a higher purity ceramic, such as 99% ceramic, is used, the lifetime of the ceramic plates 220, the ceramic top plate 215, and the ceramic alignment pins 110 deteriorates more rapidly. Thus, the lower purity ceramic provides a longer lifetime than higher purity ceramic when subjected to a high temperature hydrogen environment of the unified metal alloying process, which results in a significant reduction of the frequency of replacing the parts, and leads to an overall reduction in the costs associated with manufacturing the jet stacks 205.

Further, the ceramic plates 220 and the ceramic top plate 215 may include grooves 112 to facilitate the aligning of the plates along the alignment pins 110. In other words, the grooves 112 may allow the ceramic plates 220 and the ceramic top plate 215 to easily slide over or between the jet stack plates 210 so as to remain aligned between the jet stack plates 210 during the unified alloying process.

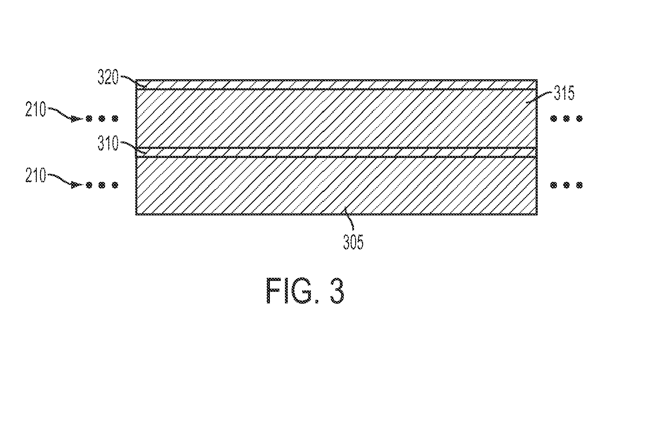

FIG. 3 shows an elevation view of a portion of two jet stack plates of FIG. 2 that are stacked, according to yet another embodiment of the present invention. The metal 305 and 315 of the jet stack plates 210 may comprise stainless steel and the plated metal 310 and 320 of the jet stack plates 210 may comprise gold. The unified metal alloying process may involve performing a first level alloying in a diffusion furnace at a predefined dwell temperature (preferably about 600 degrees Celsius) for a predefined dwell time (preferably about 20 minutes). While the preferred dwell temperature is about 600 degrees Celsius, other dwell temperatures that are sufficient to create an initial bond between one or more elements of the stainless steel and the gold can also be used.

For example, the first level alloying may cause at least one element of the stainless steel 315 to alloy with the gold 310. The first level alloying forms a bond of the stainless steal 315 to the gold 310 without the use of a bond press. In other words, the bond press is eliminated and the jet stack plates 210 instead form a bond to each other, in this case, as a result of a low level alloying dwell rather than through a high pressure, primarily mechanical, bonding procedure. More specifically, the stainless steel 315 may comprise a variety of elements such as iron (Fe), manganese (Mn), and silicon (Si). The first level alloying may alloy silicon (Si) from the stainless steel 315 to the gold 310, but the other elements of the stainless steel 315 may remain unalloyed. This is essentially a preparatory step to get the jet stack plates 210 to stick to each other in a preferred alignment prior to performing a second level alloying of the j et stack plates 210.

The second level alloying of the jet stack plates 210 may include alloying at a predefined brazing temperature (preferably about 1100 degrees Celsius) for a predefined brazing time (preferably about 4 minutes). For example, the second level alloying may alloy the iron (Fe) and manganese (Mn), among other possible elements, from the stainless steel 315 to the gold 310 so that the jet stack plates 210 are brazed together to form a jet stack.

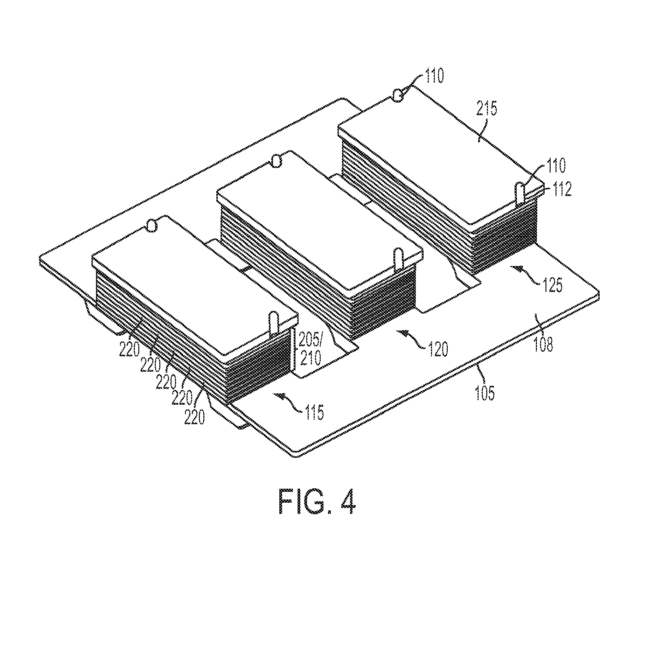

FIG. 4 shows a perspective view of the example fixture of FIG. 1 along with columns 115, 120, and 125 of the jet stack plates 210 arranged into kits 205, the ceramic plates 220, and the ceramic top plate 215, stacked and aligned using the ceramic pins 110. The operator or other qualified technician may horizontally stack the jet stack plates 210, the ceramic plates 220, and the ceramic top plate 215 so that they are parallel to a surface 108 of the fixture 105.

As illustrated in FIG. 4, the ceramic pins 110 may be structured to align the jet stack plates 220, the ceramic plates 220, and the ceramic top plate 215 into columns 115, 120, and 125 formed on the surface 108 of the fixture 105. Each column of jet stack plates may correspond to one of at least three regions 115, 120, and 125. There may also be fewer or greater than three regions where columns of jet stack plates may be formed, according to the structure or arrangement of the underlying fixture 105. Each column 115, 120, or 125 may include one or more kits 205 of jet stack plates 210, each kit 205 comprising some of the jet stack plates 210 corresponding to one jet stack. Preferably, each column 115, 120, and 125 includes about 10 jet stack kits 205 of j et stack plates 210.

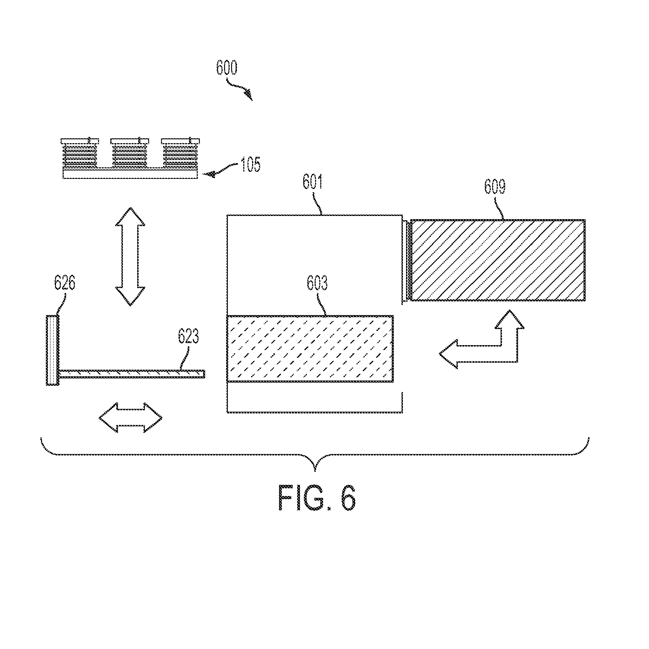

The ceramic plates 220 may be disposed between each of the kits 205, as previously explained above, and the ceramic top plate 215 may be disposed on the kits 205. The ceramic top plate 215 adds a level of thermal protection and keeps energy in the jet stack plates 210 during the unified metal alloying process. A diffusion furnace (discussed below with reference to FIGs. 6-8) performs the first level alloying and the second level alloying under a relatively low pressure corresponding to a weight of the jet stack plates 210, the ceramic plates 220, and the ceramic top plate 215, so as to reduce surface damage of the plurality of jet stack plates. In other words, compared to a bond press, which applies pressures upwards of 3000 psi, the unified metal alloying process performs both the first level alloying and second level alloying at pressures corresponding to only several grams of weight.

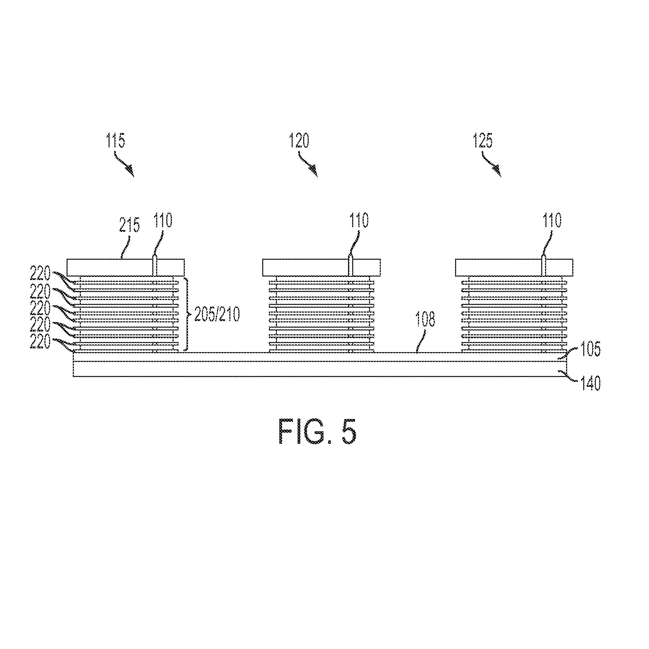

FIG. 5 shows an elevation view of the example fixture of FIG. 1 along with columns 115, 120, and 125 of the jet stack plates 210 grouped as kits 205, and ceramic plates 220/215 of FIG. 2 stacked and aligned using the ceramic pins 110. FIG. 5 also shows the elevation view of the support elements 140 beneath the surface 108 of the fixture 105 to provide structural support to the fixture 105 and the fusable parts, such as the jet stack plates 210, and to elevate the fixture 105 so that heat can be evenly distributed around the jet stack plates 210 during the unified metal alloying process.

FIG. 6 shows an example of a diffusion furnace 600 including an enclosure 601, a reaction chamber 603, a moveable furnace heating element 609, the fixture 105 holding the jet stacks and ceramic plates as illustrated in FIGs. 2-5, and a load arm 623 for inserting the fixture into the reaction chamber 603. The reaction chamber 603 may be a quartz tube. The operator, engineer, or other qualified technician trained to use the diffusion furnace 600 may transport the fixture 105 to other locations of a clean room to stack the jet stack plates 210 into kits 205, along with ceramic plates 220 and 215, all of which can be aligned using alignment pins 110, onto the fixture 105. Once the operator or other qualified technician assembles the jet stack plates and ceramic plates on the fixture 105, he or she may then return and place the fixture 105 on the load arm 623 and insert the fixture 105 using the load arm 623 into the reaction chamber 603 located in the enclosure 601 of the diffusion furnace 600 in preparation for the unified metal alloying process. The operator or other qualified technician may then seal the reaction chamber 603 of the diffusion furnace 600 using end cap 626.

The diffusion furnace 600 is structured so that various gasses may flow into and out of the reaction chamber 603. The reaction chamber 603 remains in a generally fixed location while the moveable furnace heating element 609 can move from a location spaced apart from the reaction chamber 603 to a location in substantial proximity to the reaction chamber 603. When the diffusion furnace 600 moves the furnace heating element 609 toward the reaction chamber 603, a temperature of an atmosphere within the reaction chamber 603 may rapidly increase. Conversely, when the diffusion furnace 600 moves the furnace heating element 609 away from the reaction chamber 603, the temperature of the atmosphere within the reaction chamber 603 may decrease.

Generally, the moveable furnace heating element 609 spends most of its time spaced apart from the reaction chamber 603 and typically moves toward the reaction chamber 603 only after the diffusion furnace 600 has adjusted the atmosphere of the interior of the reaction chamber 603 according to predefined conditions of the unified metal alloying process. The diffusion furnace 600 may preheat the moveable furnace heating element 609 while in the location that is spaced apart from the reaction chamber 603, and may substantially maintain the moveable furnace heating element 609 at the predefined temperature, or increase the temperature according to a predefined dwell temperature or a predefined brazing temperature.

Once the fixture 105 is located within the reaction chamber 603, the diffusion furnace 600 may proceed to cause a series of actions to be performed so that the jet stacks 205 are formed, as will be further discussed below.

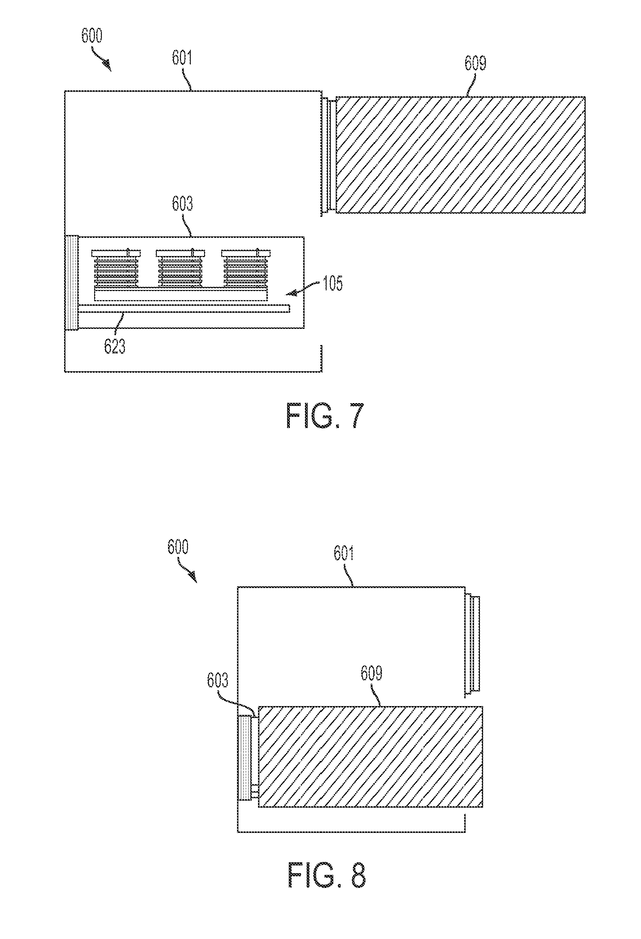

FIG. 7 shows an example of the fixture 105 supporting the jet stacks and ceramic plates as illustrated in FIGs. 2-5 inserted into the reaction chamber 603 of FIG. 6, and also the moveable furnace heating element 609 in a location spaced apart from the reaction chamber 603 of the diffusion furnace 600. After the operator or other qualified technician has inserted the fixture 105 into the reaction chamber 603 and sealed the reaction chamber 603 using the end cap 623, the unified metal alloying process may begin. For example, the diffusion furnace 600 may purge the reaction chamber 603 of substantially all oxygen (O₂) and substantially fill the reaction chamber 603 with hydrogen (H₂). At about this time, the diffusion furnace 600 may begin moving the moveable furnace heating element 609 toward the reaction chamber 603 to increase a temperature of the atmosphere inside the reaction chamber 603 to a predefined dwell temperature (about 600 degrees Celsius). The diffusion furnace 600 may thereafter perform the first level alloying in a reducing hydrogen (H₂) gas environment. Alternatively, the furnace 600 may perform the first level alloying in a reducing hydrogen (H₂) / nitrogen (N₂) mixture gas environment.

FIG. 8 shows an example of the moveable furnace heating element 609 in a location substantially proximal to the reaction chamber 603 of the diffusion furnace 600. When the moveable furnace heating element 609 is located close to the reaction chamber 603, the temperature of the atmosphere of the reaction chamber 603 increases, preferably to about 600 degrees Celsius, as mentioned above. The diffusion furnace 600 may perform the first level alloying for a predefined dwell time (about 20 minutes), after which the furnace heating element 609 may ramp up the temperature of the reaction chamber 603 to a predefined brazing temperature (about 1100 degrees Celsius) for a predefined brazing time (about 4 minutes). The second level alloying may completely fuse the individual jet stack plates 210 of the jet stacks 205 together around aperture holes aligned within the jet stacks 205.

When the diffusion furnace 600 finishes applying the first level alloying and the second level alloying to the jet stacks 205, and the diffusion furnace 600 moves the furnace heating element 609 away from the reaction chamber 603 to cool the temperature of reaction chamber 603 to about room temperature, the operator or other qualified engineer may unseal the interior of the reaction chamber 603 and remove the fixture 105 including the jet stacks 205 from the interior of the reaction chamber 603. Thus, the jet stacks 205 may be generated as a single batch without the use of a bond press, and without the use of a continuous belt driven furnace.

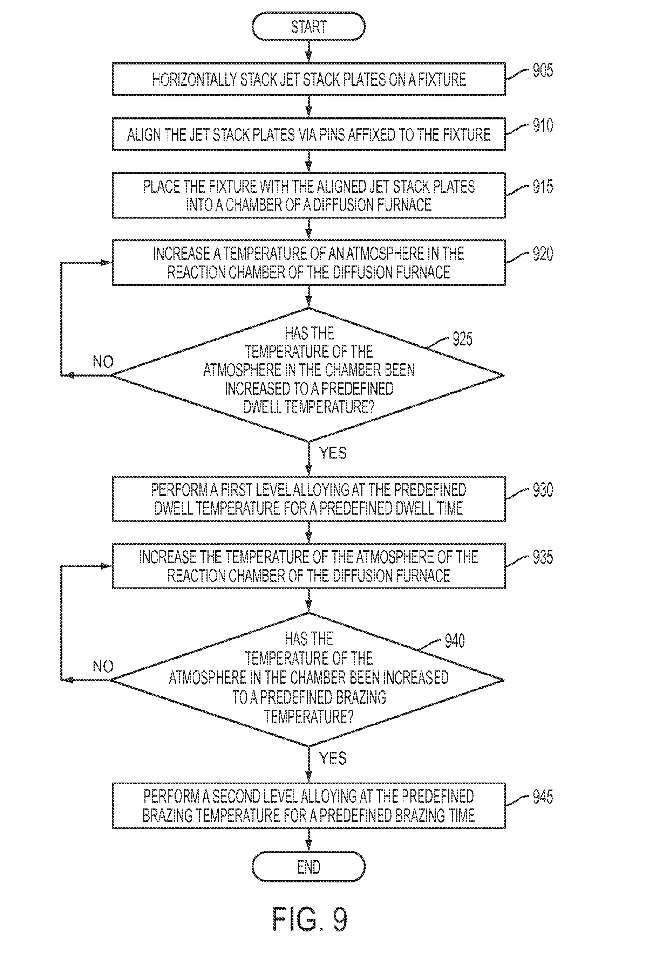

FIG. 9 shows a flow diagram illustrating some of the steps that may be performed in manufacturing jet stacks, according to some embodiments of the present invention. At 905, the operator, engineer, or other qualified technician may horizontally stack jet stack plates (e.g., 210) on a fixture (e.g., 105). At 910, the operator may align the jet stack plates (e.g., 210) via alignment pins (e.g., 110) to the fixture (e.g., 105). The aligning may be performed at about the same time as the stacking. Thereafter, at 915, the operator may place the fixture (e.g., 105) with the aligned jet stack plates (e.g., 210) into a reaction chamber (e.g., 603) of a diffusion furnace (e.g., 600).

The diffusion furnace (e.g., 600) may increase a temperature of an atmosphere in the reaction chamber (e.g., 603) at 920. The diffusion furnace (e.g., 600) can determine at 925 whether the temperature of the atmosphere has been increased to a predefined dwell temperature (about 600 degrees Celsius). If not, then the temperature may continuously increase at 920 until the dwell temperature is reached. Once the atmosphere in the reaction chamber (e.g., 603) reaches the predefined dwell temperature, the diffusion furnace (e.g., 600) may perform a first level alloying at the predefined dwell temperature for the predetermined dwell time (about 20 minutes).

At 935, the diffusion furnace (e.g., 600) may again increase the temperature of the atmosphere of the reaction chamber (e.g., 603). In this case, the moveable furnace heating element (e.g., 609) may remain in the location substantially proximal to the reaction chamber (e.g., 603) while the temperature is further increased. At 940, the diffusion furnace (e.g., 600) can make a determination whether the temperature of the atmosphere in the reaction chamber (e.g., 603) has increased to the predefined brazing temperature (about 1100 degrees Celsius). If not, then the temperature may continuously increase at 935 until the brazing temperature is reached. Once the atmosphere in the reaction chamber (e.g., 603) reaches the predefined brazing temperature, the diffusion furnace (e.g., 600) may perform a second level alloying at the predefined brazing temperature for the predetermined brazing time (about 4 minutes).

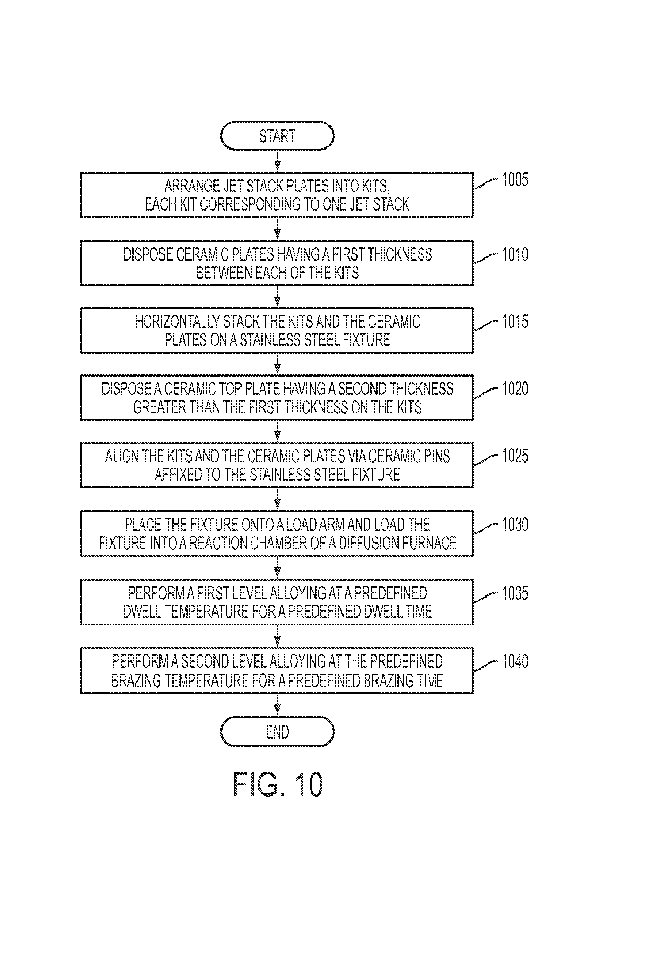

FIG. 10 shows a flow diagram illustrating other steps that may be performed in manufacturing jet stacks, according to some embodiments of the present invention. At 1005, the operator, engineer, or other qualified technician may arrange jet stack plates (e.g., 210) into kits (e.g., 205), each kit corresponding to one jet stack (e.g., 205). At 1210, the operator or other qualified technician may dispose ceramic plates (e.g., 220) having a first thickness between each of the kits (e.g., 205). The operator may horizontally stack the kits (e.g., 205) and the ceramic plates (e.g., 220) on a stainless steel fixture (e.g., 105). Practically speaking, the arranging of the jet stack plates (e.g., 210) into kits (e.g., 205) may be performed at about a same time of disposing the ceramic plates (e.g., 220) between the kits (e.g., 205), and stacking the kits (e.g., 205) and the ceramic plates (e.g., 220) on the stainless steel fixture (e.g., 105).

The operator may dispose a ceramic top plate (e.g., 215) having a thickness greater than the first thickness on the kits (e.g., 205) at 1020. The alignment pins (e.g., 110) affixed to the stainless steel fixture (e.g., 105) may be used at 1025 to align the kits (e.g., 205) and the ceramic plates (e.g., 210). At 1030, the operator may place the fixture (e.g., 105) onto a load arm (e.g., 623) and load the fixture (e.g., 105) into a reaction chamber (e.g., 603) of the diffusion furnace (e.g., 600). Thereafter, at 1035, the diffusion furnace (e.g., 600) may perform a first level alloying at the predefined dwell temperature (about 600 degrees Celsius) for the predetermined dwell time (about 20 minutes). Finally, the diffusion furnace (e.g., 600) may perform a second level alloying at the predefined brazing temperature (about 1100 degrees Celsius) for the predetermined brazing time (about 4 minutes).

It will be appreciated that various of the above-disclosed and other features and functions, or alternatives thereof, may be desirably combined into many other different systems or applications. Various presently unforeseen or unanticipated alternatives, modifications, variations, or improvements therein may be subsequently made by those skilled in the art which are also intended to be encompassed by the following claims.

## Claims

1. A method for unified metal alloying using a diffusion furnace, comprising:
stacking a plurality of fusible parts on a fixture;
aligning the fusible parts via pins affixed to the fixture;
placing the fixture with the aligned fusible parts into a reaction chamber of the diffusion furnace;
performing a first level alloying at a predefined dwell temperature for a predefined dwell time; and
performing a second level alloying at a predefined brazing temperature for a predefined brazing time.

2. The method of claim 1, wherein:
the fusible parts comprise a plurality of jet stack plates, each of the jet stack plates having a first metal plated with a second metal;
performing the first level alloying includes alloying at least one element of the first metal of one jet stack plate with the second metal of another jet stack plate; and
performing the second level alloying includes alloying at least another element of the first metal of the one jet stack plate with the second metal of the other jet stack plate.

3. The method of claim 2, wherein performing the first level alloying includes forming a bond between the at least one element of the first metal and the second metal without the use of a bond press.

4. The method of claim 2, wherein stacking further comprises:
arranging the plurality of jet stack plates into kits, each kit corresponding to one jet stack; and
disposing separation plates having a first thickness between each of the kits.

5. The method of claim 4, wherein the separation plates comprise ceramic having a purity not greater than about 96% ceramic.

6. The method of claim 4, wherein stacking further comprises disposing a ceramic top plate having a second thickness greater than the first thickness of the ceramic plates on the kits.

7. The method of claim 6, wherein:
• the pins affixed to the fixture comprise ceramic, and wherein the ceramic plates, the ceramic top plate, and the pins affixed to the fixture have a purity not greater than about 96% ceramic; or
• performing the first and second level alloying includes alloying under a relatively low pressure corresponding to a weight of the plates of the jet stacks, the ceramic plates, and the ceramic top plate, so as to reduce surface damage of the plurality of jet stack plates.

8. The method of claim 2, wherein:
• stacking includes horizontally stacking the plurality of jet stack plates on the fixture; or
• placing the fixture with the aligned jet stack plates into the reaction chamber of the diffusion furnace includes placing the fixture onto a load arm and loading the fixture into the reaction chamber of the diffusion furnace.

9. The method of claim 1, wherein:
• the predefined dwell temperature is about 600 degrees Celsius and the predefined dwell time is about 20 minutes; or
• the predefined brazing temperature is about 1100 degrees Celsius and the predefined brazing time is about 4 minutes.

10. The method of claim 1, further comprising:
purging the reaction chamber of the diffusion furnace of substantially all oxygen (O₂);
substantially filling the reaction chamber with hydrogen (H₂); and
performing the first level alloying and second level alloying in a reducing hydrogen (H₂) gas environment.

11. The method of claim 1, wherein:
• the first level alloying and the second level alloying are performed as a single batch;
• the first metal comprises stainless steel and the second metal comprises gold; or
• the fixture comprises stainless steel.

12. The method of claim 1, wherein:
• the fusible parts comprise a plurality of jet stack plates on a fixture;
• aligning the jet stack plates via pins affixed to the fixture;
• placing the fixture with the aligned jet stack plates into a reaction chamber of the diffusion furnace;
• performing a first level alloying at a predefined dwell temperature for a predefined dwell time to alloy silicon (Si) from one jet stack plate to gold (Au) from another jet stack plate; and
• performing a second level alloying at a predefined brazing temperature for a predefined brazing time to alloy manganese (Mn) and iron (Fe) from the one jet stack plate to the gold (Au) from the other jet stack plate.

13. A fixture (105), comprising:
a plurality of ceramic pins (110) protruding from a surface of the fixture, the ceramic pins (110) structured to align a plurality of fusible parts;
at least three regions (115, 120, 125) that define stackable areas for the fusible parts, each region being separated by an opening (130, 135) in the fixture; and
a plurality of support elements (140) beneath the surface of the fixture (105) to provide structural support to the fixture and the fusible parts,
wherein the fixture (105) is structured to be insertable into a diffusion furnace to alloy the fusible parts into at least one alloyed part.

14. The fixture of claim 13, wherein:
the fixture (105) comprises stainless steel;
the fusible parts comprise jet stack plates (210); and
the at least one alloyed part comprises at least one jet stack.

15. The fixture of claim 13, wherein:
the ceramic pins (110) are structured to align a plurality of jet stack plates (210) into columns;
each column corresponds to one of the at least three regions and includes a plurality of kits (205), each kit comprising some of the jet stack plates corresponding to one jet stack; and
the ceramic pins (110) are structured to align a plurality of ceramic plates disposed between each of the plurality of kits (205).
